# EUROPÄISCHE PATENTSCHRIFT

(11) **EP 2 771 663 B1**
(45) Veröffentlichungstag und Bekanntmachung des Hinweises auf die Patenterteilung: **13.04.2016**
(21) Anmeldenummer: 12787432.9
(22) Anmeldetag: 14.11.2012
(51) Int. Cl.: G01M 13/02

(54) **PRÜFVORRICHTUNG UND VERFAHREN ZUM PRÜFEN EINER ERSTEN UND/ODER EINER ZWEITEN ELEKTRISCHEN MASCHINE**
TEST APPARATUS AND METHOD FOR TESTING A FIRST AND/OR A SECOND ELECTRICAL MACHINE
DISPOSITIF DE CONTRÔLE ET PROCÉDÉ DE CONTRÔLE D'UNE PREMIÈRE ET/OU D'UNE SECONDE MACHINE ÉLECTRIQUE

(30) Priorität: 14.12.2011 DE 102011120939; 18.06.2012 DE 102012210191
(43) Veröffentlichungstag der Anmeldung: 03.09.2014
(73) Patentinhaber: Siemens Aktiengesellschaft, 80333 München (DE)
(72) Erfinder: DEICKE, Matthias, 31311 Uetze/Schwüblingsen (DE)
(86) Internationale Anmeldenummer: PCT/EP2012/072575
(87) Internationale Veröffentlichungsnummer: WO 2013/087329

(56) Entgegenhaltungen:
- US-A- 2 371 607
- Athanassios Mihailidis ET AL: "A New System for Testing Gears Under Variable Torque and Speed", , 1. November 2009 (2009-11-01), Seiten 179-192, XP055018826, DOI: 10.2174/1874477X10902030179 Gefunden im Internet: URL:http://www.benthamscience.com/meng/sam ples/meng2-3.tar/0002MENG.pdf [gefunden am 2012-02-08]

## Beschreibung

Die Erfindung betrifft eine Prüfvorrichtung zum Prüfen einer ersten und/oder einer zweiten elektrischen Maschine, wobei die Prüfvorrichtung umfasst: einen Drehmomentübertrager zum Übertragen eines Drehmoments zwischen einer ersten elektrischen Maschine und einer zweiten elektrischen Maschine, wobei der Drehmomentübertrager einen Drehmomentanschluss für die erste elektrische Maschine und einen Drehmomentanschluss für die zweite elektrische Maschine aufweist; eine elektrische Welle, welche einen ersten elektrischen Anschluss für die erste elektrische Maschine und einen zweiten elektrischen Anschluss für die zweite elektrische Maschine aufweist. Der zu prüfende Synchrongenerator (SG) und/oder das zu prüfende Getriebe kann auch als *'device under test'* (DUT) bezeichnet werden. Unter 'Drehmomentübertrager' wird hier eine Vorrichtung verstanden, mittels der ein Drehmoment übertragen werden kann. Ein Drehmomentübertrager kann beispielsweise ein Getriebe, eine Kupplung, eine Welle, einen Hebel oder eine sonstige Vorrichtung (insbesondere mechanische, elektromechanische oder hydromechanische Vorrichtung) umfassen, mittels der ein Drehmoment übertragen werden kann. Ein weiterer Drehmomentübertrager (insbesondere ein zu prüfendes Getriebe) kann ein zu prüfendes Teil der ersten und/oder der zweiten elektrischen Maschine sein. Das Getriebe des erstgenannten und/oder des weiteren Drehmomentübertragers kann beispielsweise jeweils Teil eines Hybrid-Drive-Systems (HDS) sein.

Außerdem betrifft die Erfindung ein Verfahren zum Prüfen einer ersten und/oder einer zweiten elektrischen Maschine, das folgende Schritte umfasst: Zuführen einer elektrischen Leistung von einer externen Energiequelle zu der ersten elektrischen Maschine zum Umwandeln der zugeführten elektrischen Leistung in mechanische Leistung und/oder Zuführen einer mechanischen Leistung zu der ersten elektrischen Maschine; Übertragen einer mechanischen Leistung von der ersten elektrischen Maschine zu der zweiten elektrischen Maschine; Umwandeln zumindest eines Teils der mechanischen Leistung, die der zweiten elektrischen Maschine zugeführt wurde, mittels der zweiten elektrischen Maschine in elektrische Leistung; Übertragen zumindest eines Teils der elektrischen Leistung, die von der zweiten elektrischen Maschine mittels der Umwandlung mechanischer Leistung erzeugt wurde, zu der ersten elektrischen Maschine über eine elektrische Welle; und Umwandeln zumindest eines Teils der elektrischen Leistung, die von der zweiten elektrischen Maschine der ersten elektrischen Maschine zugeführt wurde, mittels der ersten elektrischen Maschine in mechanische Leistung.

Die Druckschrift von Athanassios Mihailidis, et al., "A New System For Testing Gears Under Variable Torque and Speed", 2009 beschreibt eine elektrische Welle ohne eine Spannungsumsetzung.

Die Druckschrift US 2,371,607 beschreibt ebenfalls eine Prüfvorrichtung mit einer elektrischen Welle ohne eine Spannungsumsetzung.

Die DE 199 18 820 B4 beschreibt einen Prüfstand zum Prüfen von Antriebskomponenten. Hierbei kontrolliert ein erster Steller einen Leistungsfluss zu einem ersten Elektromotor, der als erster Drehmomentgenerator dient. Ein zweiter Steller kontrolliert einen Leistungsfluss zu einem zweiten Elektromotor, der als zweiter Drehmomentgenerator dient. Beide Steller werden aus einem Netz gespeist.

Diese bekannte Prüfvorrichtung hat die Eigenschaft, dass sie während des Betriebs eine hohe elektrische Leistungsaufnahme aufweist. Dadurch entstehen hohe Energiekosten sowie hohe Anschaffungs- und Betriebskosten für die Steller.

Die Aufgabe der vorliegenden Erfindung besteht darin, eine Prüfvorrichtung zum Prüfen einer ersten und/oder einer zweiten elektrischen Maschine bereitzustellen, die in der Anschaffung und im Betrieb kostengünstiger ist als die bekannte Prüfvorrichtung.

Erfindungsgemäß wird diese Aufgabe dadurch gelöst, dass die Prüfvorrichtung zum Prüfen einer ersten und/oder einer zweiten elektrischen Maschine Folgendes umfasst:
- einen Drehmomentübertrager zum Übertragen eines Drehmoments zwischen einer ersten elektrischen Maschine und einer zweiten elektrischen Maschine, wobei der Drehmomentübertrager einen Drehmomentanschluss für die erste elektrische Maschine und einen Drehmomentanschluss für die zweite elektrische Maschine aufweist;
- eine elektrische Welle, welche einen ersten elektrischen Anschluss für die erste elektrische Maschine und einen zweiten elektrischen Anschluss für die zweite elektrische Maschine aufweist;
wobei die elektrische Welle dafür vorbereitet ist, zwischen dem ersten elektrischen Anschluss und dem zweiten elektrischen Anschluss mindestens um einen Faktor v so viel elektrische Leistung zu übertragen, wie Einspeisevorrichtungen der Prüfvorrichtung zum Einspeisen von elektrischer Energie aus einer externen elektrischen Energiequelle in die elektrische Welle maximal vorbereitet sind, wobei der Faktor v mindestens 5 beträgt und unterstellt wird, dass der Faktor v den genannten Mindestwert aufweist, falls die Prüfvorrichtung eine solche Einspeisevorrichtung nicht umfasst. Außerdem umfasst die Prüfvorrichtung eine mechanische Antriebsvorrichtung zur Einkopplung von mechanischer Leistung in die erste und/oder in die zweite elektrische Maschine und/oder in den Drehmomentübertrager.

Verfahren zum Prüfen einer ersten und/oder einer zweiten elektrischen Maschine, wobei das Verfahren folgende Schritte umfasst:
- Zuführen einer elektrischen Leistung von einer externen Energiequelle zu der ersten elektrischen Maschine zum Umwandeln der zugeführten elektrischen Leistung in mechanische Leistung und/oder Zuführen einer mechanischen Leistung zu der ersten elektrischen Maschine;
- Übertragen einer mechanischen Leistung von der ersten elektrischen Maschine zu der zweiten elektrischen Maschine;
- Umwandeln zumindest eines Teils der mechanischen Leistung, die der zweiten elektrischen Maschine zugeführt wurde, mittels der zweiten elektrischen Maschine in elektrische Leistung;
- Übertragen zumindest eines Teils der elektrischen Leistung, die von der zweiten elektrischen Maschine mittels der Umwandlung mechanischer Leistung erzeugt wurde, zu der ersten elektrischen Maschine über eine elektrischen Welle; und
- Umwandeln zumindest eines Teils der elektrischen Leistung, die von der zweiten elektrischen Maschine der ersten elektrischen Maschine zugeführt wurde, mittels der ersten elektrischen Maschine in mechanische Leistung;
dadurch gekennzeichnet, dass die elektrische Welle dafür vorbereitet ist, zwischen der ersten elektrischen Maschine und der zweiten elektrischen Maschine mindestens um einen Faktor v so viel elektrische Leistung zu übertragen, wie Einspeisevorrichtungen der Prüfvorrichtung zum Einspeisen von elektrischer Energie aus einer externen elektrischen Energiequelle in die elektrische Welle maximal vorbereitet sind, wobei der Faktor v mindestens 5 beträgt und unterstellt wird, dass der Faktor v den genannten Mindestwert aufweist, falls die Prüfvorrichtung eine solche Einspeisevorrichtung nicht umfasst. Die Prüfvorrichtung umfasst eine mechanische Antriebsvorrichtung zur Einkopplung von mechanischer Leistung in die erste und/oder in die zweite elektrische Maschine und/oder in den Drehmomentübertrager.

Aufgrund der elektrischen Welle brauchen nur die zum Anlauf der Prüfvorrichtung und zum Ausgleich der laufenden Verluste erforderlichen Leistungen sowie die dafür erforderlichen Drehmomente aufgebracht werden. Dadurch können Kosten in der Anschaffung und im Betrieb der externen Energiequelle eingespart werden.

Bei elektrischer Einspeisung kann ein Leistungsbedarf gegenüber bekannten Prüfständen dadurch verringert werden, dass in der elektrischen Welle Frequenz- und/oder Spannungsumsetzungen möglichst weitgehend weggelassen werden. Durch Vermeiden von Frequenz- und/oder Spannungsumsetzungen in der elektrischen Welle werden Verluste dort vermieden, wo sie vom Absolutwert her betrachtet den größten Schaden verursachen (d.h. im Bereich des Leistungskreislaufs der umlaufenden Hauptleistung). Mit Blick auf die unterschiedlichen Absolutwerte ist es insgesamt vorteilhafter, einen prozentual schlechteren Wirkungsgrad im Bereich der mechanischen Antriebsquelle und/oder im Bereich der Einspeisevorrichtungen in Kauf zu nehmen, wenn damit eine prozentual gleich hohe Verringerung von Verlusten in der elektrischen Welle (d.h. dort, wo die absoluten Leistungswerte am höchsten sind) erreicht werden kann.

Aus diesem Grund kann es wirtschaftlicher sein, die erforderliche Leistung in eine Antriebswelle einer der beiden elektrischen Maschinen mechanisch einzuspeisen. Damit kann ein Leistungsbedarf für eine Aufrechterhaltung des Leistungskreislaufs im Vergleich zu einem Leistungsbedarf von bekannten Prüfständen verringert werden. Ein Hilfsantrieb für die mechanische Einspeisung der erforderlichen Leistung benötigt nur ca. 8 % der Prüfstandsleistung und kann daher auch bei großen Prüfstandsleistungen von beispielsweise 7,7 MW oder 14,2 MW noch in erschwinglicher Niederspannungstechnik ausgeführt werden.

Bevorzugt ist, wenn der Faktor v mindestens 6, bevorzugt mindestens 7 oder 8, insbesondere bevorzugt mindestens 9, beträgt. Je höher der Faktor v ist, desto niedriger sind Energieverbrauch und Energiekosten der Prüfvorrichtung im laufenden Betrieb.

Eine vorteilhafte Ausführungsform sieht vor, dass die Prüfvorrichtung eine mechanische Antriebsvorrichtung zur Einkopplung von mechanischer Leistung in die erste und/oder in die zweite elektrische Maschine umfasst. Hierdurch kann die Leistung, welche der Prüfvorrichtung während des Betriebs zuzuführen ist, bei der Dimensionierung von Komponenten der elektrischen Welle unberücksichtigt bleiben.

Auch ist es vorstellbar, dass die Prüfvorrichtung eine mechanische Antriebsvorrichtung zur Einkopplung von mechanischer Leistung in den Drehmomentübertrager umfasst. Hierdurch kann auf einen zweiten Wellenanschluss (an einer der beiden elektrischen Maschinen) verzichtet werden.

Insbesondere bevorzugt ist, wenn die Prüfvorrichtung eine Vorrichtung zum Verdrehen eines Stators der ersten elektrischen Maschine gegenüber einem Stator der zweiten elektrischen Maschine und/oder wenn die Prüfvorrichtung eine Vorrichtung zum Verdrehen eines Stators der zweiten elektrischen Maschine gegenüber einem Stator der ersten elektrischen Maschine umfasst. Hierdurch können die Drehfelder der beiden elektrischen Maschinen um einen gewünschten Winkel gegeneinander verdreht werden. Damit können die beiden elektrischen Maschinen gleichzeitig elektrisch und mechanisch gegeneinander verspannt werden, um Drehmomenttests durchzuführen.

Auch kann die Prüfvorrichtung so definiert sein, dass sie auch die erste und/oder die zweite elektrische Maschine umfasst. Wenn die Prüfvorrichtung von vorneherein eine der beiden elektrischen Maschinen umfasst, können Tests an der anderen elektrischen Maschine nach minimaler Rüstzeit durchgeführt werden.

Eine vorteilhafte Ausführungsform sieht vor, dass die erste elektrische Maschine und/oder die zweite elektrische Maschine eine Synchronmaschine ist. Aufgrund der elektrischen Welle eignet sich die Prüfvorrichtung insbesondere für eine Durchführung von Tests an Synchronmaschinen und Getriebetests mit Synchronmaschinen.

Weitere Weiterbildungen sehen vor, dass die elektrische Welle einen Phasenschieber umfasst und/oder dass die elektrische Welle keinen Wandler umfasst oder dass die elektrische Welle einen Frequenzumrichter umfasst oder zwei in Serie geschaltete Frequenzumrichter oder Wechselrichter umfasst. Insbesondere die Variante ohne jeglichen Wandler oder Frequenzumrichter in der elektrischen Welle ist bevorzugt, da hierdurch Leistungsverluste im Kreislauf der Hauptleistung minimiert werden können.

In einer besonders bevorzugten Weiterbildung umfasst die Einspeisevorrichtung einen Frequenzumrichter. Hierdurch kann eine Netzspannung in der erforderlichen Weise an Spannungs- und Phasenverhältnisse der elektrischen Welle angepasst werden.

Die Erfindung ist anhand der beigefügten Zeichnungen näher erläutert, in denen zeigen:
- FIG 1: schematisch eine erste Ausführungsform einer erfindungsgemäßen Prüfvorrichtung,
- FIG 2: schematisch eine zweite Ausführungsform einer erfindungsgemäßen Prüfvorrichtung,
- FIG 3: schematisch eine dritte Ausführungsform einer erfindungsgemäßen Prüfvorrichtung,
- FIG 4: schematisch einen Ablauf eines erfindungsgemäßen Prüfverfahrens.

Die nachfolgend näher geschilderten Ausführungsbeispiele stellen bevorzugte Ausführungsformen der vorliegenden Erfindung dar.

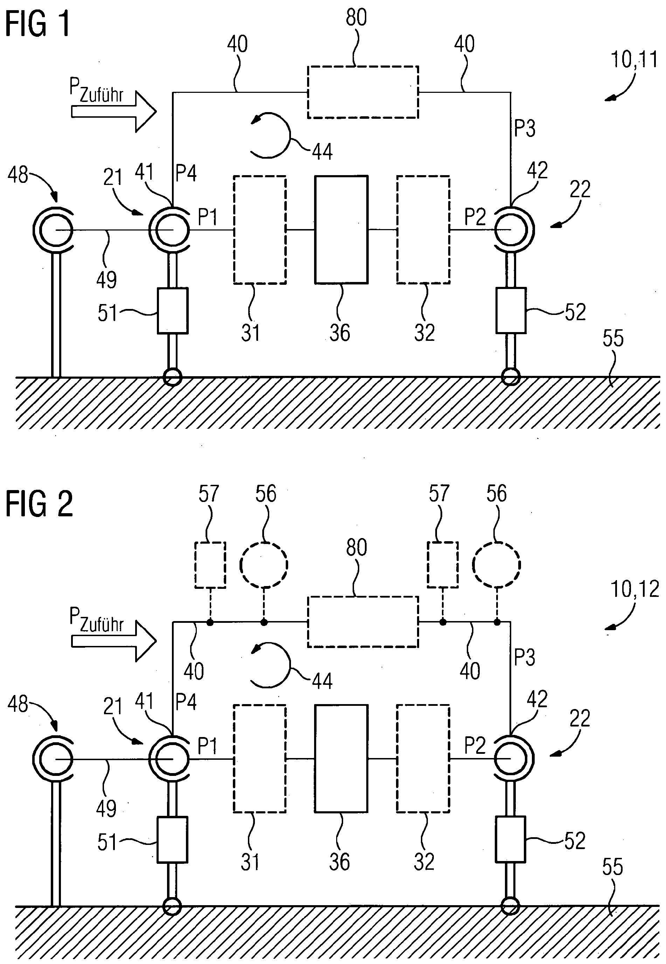

Die in der in FIG 1 gezeigte erste Ausführungsform 11 umfasst eine erste elektrische Maschine 21 mit einem ersten Getriebe 31 und eine zweite elektrische Maschine 22 mit einem zweiten Getriebe 32. Die erste elektrische Maschine 21 umfasst eine erste (in der Figur nicht dargestellte) Welle, die mit einer Getriebewelle des ersten Getriebes 31 gemeinsam ist oder mit ihr drehfest verbunden ist. Ebenso bildet die zweite elektrische Maschine 22 eine zweite (in der Figur nicht dargestellte) Welle, die mit einer Getriebewelle des zweiten Getriebes 32 gemeinsam ist oder mit ihr drehfest verbunden ist. Außerdem ist eine Ausgangswelle des ersten Getriebes 31 mittels eines Flansches 36 mit einer Ausgangswelle des zweiten Getriebes 32 drehfest verbunden. Vorzugsweise sind die beiden elektrischen Maschinen 21, 22 baugleich. Ebenso bevorzugt ist, wenn die beiden Getriebe 31, 32 baugleich sind. Als typisches Anwendungsbeispiel seien Windmühlengetriebe für eine Nennleistung von 3 MW genannt, die auf der Antriebsseite mit 13 U/min und auf der Abtriebsseite mit 430 U/min getestet werden können.

Die FIG 1 bis FIG 3 sind auch dann anwendbar, wenn das erste 31 und/oder das zweite 32 Getriebe nicht umfassend ausgeführt ist, sondern nur als Drehmomentübertragung, die im einfachsten Fall mittels der jeweiligen Motorwelle erfolgt. In diesem Fall kann das jeweilige Getriebe 31, 32 als Getriebe mit einem Übersetzungsverhältnis von 1:1 angesehen werden. In allen Figuren zeigt eine Strichelung der Begrenzungslinien, dass betreffende Einheiten optional sind.

Typischerweise sind beide elektrische Maschinen 21, 22 Synchronmaschinen, wobei deren Rotor jeweils mindestens eine Feldwicklung oder einen Permanentmagneten trägt und deren Statoren jeweils Induktionswicklungen tragen. Die beiden elektrischen Maschinen 21, 22 sind über eine elektrische Welle 40 miteinander im gleichem Drehsinn (beispielsweise in der Phasenfolge UVW oder in der Phasenfolge UWV) verbunden. Zum Anschluss der ersten elektrischen Maschine 21 umfasst die elektrische Welle 40 einen ersten elektrischen Anschluss 41. Zum Anschluss der zweiten elektrischen Maschine 22 umfasst die elektrische Welle 40 einen zweiten elektrischen Anschluss 42.

Um zwischen den beiden elektrischen Maschinen 21, 22 ein Drehmoment zu erzeugen, reicht es bei gleichem Aufbau und gleicher Winkelstellung der Statoren der beiden elektrischen Maschinen 21, 22 und gleichem Übersetzungsverhältnis der beiden Getriebe 31, 32 im einfachsten Fall aus, vor der Inbetriebnahme der Prüfvorrichtung 10 die Polräder der beiden elektrischen Maschinen 21, 22 mittels des Flansches 36 aneinander in einer Stellung zu befestigen, in der sie um einen gewünschten Umfangswinkel gegeneinander verdreht sind.

Alternativ oder zusätzlich kann die erste elektrische Maschine 21 auf einem Neigungs- oder Drehgestell 51 befestigt sein, mit der ihr Stator gegenüber einem Stator der zweiten elektrischen Maschine 22 um einen ersten Umfangswinkel um eine Drehachse der ersten elektrischen Maschine 21 verdreht werden kann. Die zweite elektrische Maschine 22 ist vorzugsweise an einem Gebäudeteil 55, beispielsweise an einem Hallenboden, befestigt, an dem auch das Gestell 51 der ersten elektrischen Maschine 21 befestigt ist. Alternativ oder zusätzlich kann auch die zweite elektrische Maschine 22 auf einem Neigungs- oder Drehgestell 52 befestigt sein, mit der ihr Stator gegenüber einem Stator der ersten elektrischen Maschine 21 um einen zweiten Umfangswinkel um eine Drehachse der zweiten elektrischen Maschine 22 verdreht werden kann.

Mittels einer Verdrehung des Stators der ersten elektrischen Maschine 21 im Verhältnis zu dem Stator der zweiten elektrischen Maschine 22 können die Drehfelder der beiden elektrischen Maschinen 21, 22 zu Testzwecken gegeneinander um einen gewünschten konstanten oder veränderlichen Betrag (Winkel-Offset) verdreht werden. Hierdurch kann zwischen den Enden 41, 42 der elektrischen Welle 40 eine unterschiedliche elektrische Phasenlage eingestellt werden. Die unterschiedliche Phasenlage zwischen den Enden 41, 42 der elektrischen Welle 40 stellt eine Potentialdifferenz zwischen den Enden 41, 42 der elektrischen Welle 40 dar. Da die Phasenleitungen der elektrischen Welle (gute) Leiter sind, führt diese Potentialdifferenz zu einem Strom, der auch durch die Induktionswicklungen der elektrischen Maschinen 21, 22 fließt und deren Läufer mittels Lorentzkraft antreibt. Dabei arbeitet eine der beiden elektrischen Maschinen 21, 22 als Generator und die andere als Motor.

Alternativ und/oder zusätzlich kann auch ein Frequenzumrichter 80 (FU) dazu verwendet werden, um die Drehfelder der elektrischen Maschinen 21, 22 gegeneinander zu verdrehen und damit im Ergebnis das Gleiche zu erreichen, was mit einer Drehung des Befestigungsgestells 51, 52 der ersten 21 oder der zweiten 22 elektrischen Maschine erreicht werden kann.

Im Betrieb findet eine ständige Umwandlung von elektrischer Energie in mechanische Energie und umgekehrt statt. Dabei entstehen Reibungsverluste Pᵣ, die Wärme und Schall erzeugen, und ohmsche Verluste Pₒₕₘ, die Wärme erzeugen. Um die Prüfvorrichtung 10 in Betrieb zu nehmen und/oder den Betrieb der Prüfvorrichtung 10 aufrechtzuerhalten, können die genannten Verlustarten Pᵣ, Pₒₕₘ durch Zufuhr von mechanischer und/oder elektrischer Energie ausgeglichen werden. Damit wird erreicht, dass eine Energie, die bei einer Inbetriebnahme (einem Anlauf) der Prüfvorrichtung in den Leistungskreislauf 44 der Prüfvorrichtung 10 eingespeist wurde, weiterhin im Leistungskreislauf 44 der Prüfvorrichtung 10 umlaufen kann. Damit wird im Leistungskreislauf 44 ein ständiger Leistungsfluss aufrechterhalten, dessen Leistung P_{Kreis} höher ist oder viel höher sein kann als eine Leistung P_{zuführ}, mit der die Energie bei einer Inbetriebnahme (einem Anlauf) der Prüfvorrichtung 10 in den Leistungskreislauf 44 der Prüfvorrichtung 10 eingespeist wurde.

Für eine Zufuhr von mechanischer Energie ist die Welle der ersten elektrischen Maschine 21 auch auf einer anderen Seite der elektrischen Maschine 21 herausgeführt und mit einer Antriebswelle 49 eines Hilfsmotors 48 drehfest verbunden.

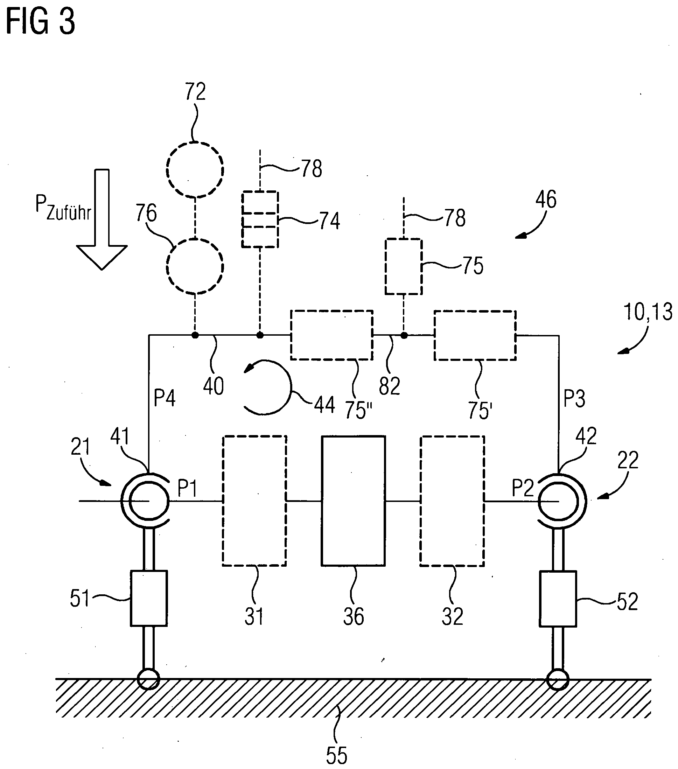

Während der Prüfung in der Prüfvorrichtung 10 kann der Leistungsverlust je Getriebe 31, 32 beispielsweise 2 % und je elektrischer Maschine 21, 22 beispielsweise 2 % betragen, so dass die externe Energiequelle 46 (siehe Fig. 3), 48 dann nur 8 % der Leistung, die im Leistungskreislauf 44 umläuft, fortlaufend ersetzen muss. Deshalb braucht beim Anlauf der Prüfvorrichtung 10 (und auch danach) von der externen Energiequelle 46, 48 nicht die volle Leistung Pᵥₒₗₗ und/oder das volle Drehmoment Mᵥₒₗₗ aufgebracht werden, sondern nur soviel Leistung und Drehmoment, wie zur Überwindung einer Standreibung und zum Ausgleich der laufenden Verluste Pᵣ, Pₒₕₘ erforderlich ist. Je geringer die Standreibung und die Rollreibung sind, desto kleiner kann die externe Energiequelle 46, 48 dimensioniert werden. Eine Verringerung der Leistung P_{zuführ} der externen Energiequelle 46, 48 hat neben einer Vermeidung von EMV-Problemen und neben den direkten Kostenvorteilen bei großen Prüfständen 10 zusätzlich den Vorteil, dass die externe Energiequelle 46, 48 dann mit Niederspannung betrieben werden kann und somit auf kostspielige Mittelspannungsumrichter verzichtet werden kann.

Zum Vergleich: Bei großen Prüfvorrichtungen nach dem Stand der Technik sind in der elektrischen Welle zwei 4-Quadraten-Frequenzumrichter in Serie geschaltet, die jeweils einen Leistungsverlust von etwa 3 % aufweisen. Die beiden Transformatoren am netzseitigen Abgriff (mit 10 bis 30 kV) zwischen den beiden Frequenzumrichtern (die netzseitig für 690 V ausgelegt sind) tragen mit jeweils etwa 1 % zum Leistungsverlust bei. Insgesamt belaufen sich die Leistungsverluste im Leistungskreislauf bei großen Prüfvorrichtungen nach dem Stand der Technik auf etwa 16 %. Mittels Weglassens der in Serie geschalteten zwei 4-Quadraten-Frequenzumrichter und der beiden Transformatoren am netzseitigen Abgriff lassen sich (neben den Anschaffungskosten für diese Geräte) etwa 8% der Energiekosten für den Betrieb des Prüfstandes einsparen.

Allerdings haben die Läufer und die Getriebe 31, 32 Trägheitsmomente, die beim Anlauf der Prüfvorrichtung 10 beschleunigt werden müssen, so dass ein Anlauf der Prüfvorrichtung 10 umso länger dauert, je leistungsschwächer die externe Energiequellen 46 (siehe Fig. 3), 48 zusammengenommen sind.

Die Leistung, die benötigt wird, um die erforderliche Energie bei einer Inbetriebnahme (einem Anlauf) der Prüfvorrichtung 10 in den Leistungskreislauf 44 der Prüfvorrichtung 10 einzuspeisen und den Leistungskreislauf 44 während des Betriebs aufrechtzuerhalten, ist wesentlich (beispielsweise um den Faktor 10) kleiner, als eine Leistung, für die bei bekannten Vorrichtungen eine elektrische Energiezufuhr aus dem Netz ausgelegt ist. Ein Vorteil der vorliegenden Erfindung besteht also darin, dass elektrische Energiequellen 46 (siehe Fig. 3) und/oder mechanische Antriebe 48 verwendet werden können, die kostengünstiger sind als Energiezuführvorrichtungen von bekannten Prüfvorrichtungen.

Die in der in FIG 2 gezeigte zweite Ausführungsform 12 umfasst zusätzlich zu der in FIG 1 gezeigten ersten Ausführungsform 11 einen elektronischen und/oder einen induktiven Phasenschieber 56 und/oder eine Belastungsdrossel 57, der bzw. die an der elektrischen Welle 40 angeschlossen ist und mit dem eine Phasenlage der elektrischen Welle 40 und somit ein Betriebspunkt der Prüfvorrichtung 10 beeinflusst werden kann. Dies kann insbesondere beim Prüfen von permanenterregten Synchrongeneratoren 21, 22 nützlich sein. Als Phasenschieber 56 kann beispielsweise ein Wechselrichter verwendet werden.

Die FIG 1 und 2 zeigen mit den gestrichelten Linien einen oder zwei optionale Frequenzumrichter 80 in der elektrischen Welle 40. Auch der Frequenzumrichter 80 kann dazu verwendet werden, die Drehfelder der elektrischen Maschinen 21, 22 gegeneinander zu verdrehen, um damit im Ergebnis das Gleiche zu erreichen, was mit einer Drehung des Befestigungsgestells 51, 52 der ersten 21 oder der zweiten 22 elektrischen Maschine erreicht werden kann. Mittels des Frequenzumrichters 80 können die beiden elektrischen Maschinen 21, 22 in der Prüfvorrichtung 11, 12, 13 auch dann mit unterschiedlichem Poolpaarzahlverhältnis synchronisiert betrieben werden, wenn sich das Übersetzungsverhältnis der beiden Getriebe 31, 32 nicht unterscheidet. Entsprechendes gilt, wenn ein Unterschied in der Poolpaarzahl der elektrischen Maschinen 21, 22 nicht durch einen Unterschied des Übersetzungsverhältnisses der beiden Getriebe 31, 32 ausgeglichen wird.

Alternativ oder zusätzlich zu der mechanischen Energiezufuhr für die Inbetriebnahme und/oder für die Aufrechterhaltung des Betriebs kann dem Leistungskreislauf 44 auch elektrische Energie Pₑₗₑₖ zugeführt werden. Die FIG 3 zeigt hierfür ein Beispiel mit einer dritten Ausführungsform 13, in der eine elektrische Energiequelle 46 dazu vorbereitet ist, elektrische Energie in die elektrische Welle 40 einzuspeisen. In diesem Fall kann auf eine mechanische Einspeisung von Energie mittels des Hilfsmotors 48 verzichtet werden. Die elektrische Einspeisung 46 kann aus einem elektrisch und/oder mechanisch angetriebenen Hilfsgenerator 72 und/oder über einen Frequenzumrichter 74 und/oder aus einer anderen Drehstromquelle erfolgen. Der Frequenzumrichter 74 kann aus einem Drehstromnetz 78 oder aus einer anderen Drehstromquelle gespeist werden.

Darüber hinaus zeigt die FIG 3 die ebenfalls mit anderen Ausführungsbeispielen kombinierbare Möglichkeit, elektrische Energie für die Inbetriebnahme und/oder die Aufrechterhaltung des Betriebs einem Zwischenkreis 82 in Gleichstromtechnologie eines in der elektrischen Welle eingeschleiften Frequenzumrichters 75', 75" zuzuführen. Die netzseitige Energiezufuhr kann dann über einen Gleich- oder Wechselrichter 75 erfolgen.

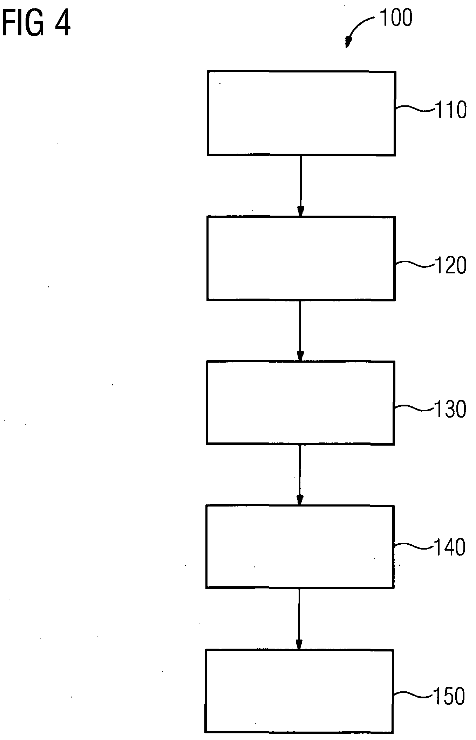

Das in FIG 4 gezeigte Verfahren 100 zum Prüfen einer ersten 21 und/oder einer zweiten 22 elektrischen Maschine umfasst folgende Schritte: In einem ersten Schritt 110 wird eine elektrische Leistung Pₑₗₑₖ von einer externen Energiequelle 72, 74, 76, 78 einer ersten elektrischen Maschine 21 zum Umwandeln der zugeführten elektrischen Leistung P_{mech}, Pₑₗₑₖ in mechanische Leistung P₁ zugeführt und/oder es wird eine mechanische Leistung P_{mech} der ersten elektrischen Maschine 21 zugeführt. In einem zweiten Schritt 120 wird eine mechanische Leistung P₂ von der ersten elektrischen Maschine 21 zu der zweiten elektrischen Maschine 22 übertragen. In einem dritten Schritt wird zumindest ein Teil der mechanischen Leistung P₂, die der zweiten elektrischen Maschine 22 zugeführt wurde, mittels der zweiten elektrischen Maschine 22 in elektrische Leistung P₃ umgewandelt. In einem vierten Schritt 140 wird zumindest ein Teil der elektrischen Leistung P₃, die von der zweiten elektrischen Maschine 22 mittels Umwandlung mechanischer Leistung (aus zumindest einem Teil von P₂) erzeugt wurde, zu der ersten elektrischen Maschine 21 übertragen. In einem fünften Schritt 150 wird zumindest ein Teil der elektrischen Leistung P₄, die von der zweiten elektrischen Maschine 22 der ersten elektrischen Maschine 21 zugeführt wurde, mittels der ersten elektrischen Maschine 21 in mechanische Leistung umgewandelt. Die elektrische Welle ist dafür vorbereitet, zwischen der ersten elektrischen Maschine 21 und der zweiten elektrischen Maschine 22 mindestens um einen Faktor v soviel elektrische Leistung zu übertragen, wie Einspeisevorrichtungen 72, 74, 76 der Prüfvorrichtung 10 zum Einspeisen von elektrischer Energie aus einer externen elektrischen Energiequelle 72, 74, 76, 78 in die elektrische Welle 40 maximal vorbereitet sind, wobei v mindestens 5 beträgt und unterstellt wird, dass die genannte Bedingung für v erfüllt ist, falls die Prüfvorrichtung 10 eine solche Einspeisevorrichtung 72, 74, 76 nicht umfasst.

Mit der Prüfvorrichtung 10, insbesondere mit jeder der Ausführungsformen, können Funktionen der ersten 21 und/oder der zweiten 22 elektrische Maschine bei unterschiedlichen Drehzahlen getestet werden. Die Erfindung, insbesondere jede der Ausführungsformen, ist auch mit Prüfvorrichtungen 10 durchführbar, die mehr als drei Phasen unterstützen. Alle erwähnten Frequenzumrichter 74, 80 (FU) sind vorzugsweise Vier-Quadranten-Frequenzumrichter.

Bei einem Betrieb ohne Getriebe 31, 32 können Tests an Synchrongeneratoren 11, 12, 13 durchgeführt werden. Dies ist vorteilhaft, weil dadurch Belastungsdrosseln eingespart werden können, die sonst für die elektrische Ersatzprüfung von Synchrongeneratoren mittels Leerlauf- und Kurzschlussversuchen benötigt werden. Insbesondere bei permanenterregten Synchrongeneratoren (PMG) sind die Belastungsdrosseln kostenintensiv, weil für jede Generatorvariante eine eigene Belastungsdrossel entwickelt und gefertigt werden muss.

## Patentansprüche

1. Prüfvorrichtung (10) zum Prüfen einer ersten (21) und/oder einer zweiten (22) elektrischen Maschine, wobei die Prüfvorrichtung (10) umfasst:
- einen Drehmomentübertrager (36) zum Übertragen eines Drehmoments zwischen einer ersten elektrischen Maschine (22) und einer zweiten elektrischen Maschine (21), wobei der Drehmomentübertrager (36) einen Drehmomentanschluss für die erste elektrische Maschine (21) und einen Drehmomentanschluss für die zweite elektrische Maschine (22) aufweist;
- eine elektrische Welle (40), welche einen ersten elektrischen Anschluss (41) für die erste elektrische Maschine (21) und einen zweiten elektrischen Anschluss (42) für die zweite elektrische Maschine (22) aufweist;
wobei die elektrische Welle (40) dafür vorbereitet ist, zwischen dem ersten elektrischen Anschluss (41) und dem zweiten elektrischen Anschluss (42) mindestens um einen Faktor v so viel elektrische Leistung zu übertragen, wie
Einspeisevorrichtungen (72, 74, 76) der Prüfvorrichtung (10) zum Einspeisen von elektrischer Energie aus einer externen elektrischen Energiequelle (72, 74, 76, 78) in die elektrische Welle (40) maximal vorbereitet sind, wobei der Faktor v mindestens 5 beträgt und unterstellt wird, dass der Faktor v den genannten Mindestwert aufweist, falls die Prüfvorrichtung (10) eine solche Einspeisevorrichtung (72, 74, 76) nicht umfasst;
**dadurch gekennzeichnet, dass**
die Prüfvorrichtung (10) eine mechanische Antriebsvorrichtung (48) zur Einkopplung von mechanischer Leistung (P_{mech}) in die erste (21) und/oder in die zweite (22) elektrische Maschine und/oder in den Drehmomentübertrager (36) umfasst.

2. Prüfvorrichtung (10) nach Anspruch 1, **dadurch gekennzeichnet, dass** der Faktor v mindestens 6, bevorzugt mindestens 7 oder 8, insbesondere bevorzugt mindestens 9, beträgt.

3. Prüfvorrichtung (10) nach Anspruch 1 oder 2, **dadurch gekennzeichnet, dass** die Prüfvorrichtung (10) eine Vorrichtung (51) zum Verdrehen eines Stators der ersten elektrischen Maschine (21) gegenüber einem Stator der zweiten elektrischen Maschine (22) und/oder dass die Prüfvorrichtung (10) eine Vorrichtung (10) zum Verdrehen eines Stators der zweiten elektrischen Maschine (22) gegenüber einem Stator der ersten elektrischen Maschine (21) umfasst.

4. Prüfvorrichtung (10) nach einem der Ansprüche 1 bis 3, **dadurch gekennzeichnet, dass** die Prüfvorrichtung (10) auch die erste (21) und/oder die zweite (22) elektrische Maschine umfasst.

5. Prüfvorrichtung (10) nach Anspruch 4, **dadurch gekennzeichnet, dass** die erste elektrische Maschine (21) und/oder die zweite elektrische Maschine (22) eine Synchronmaschine ist.

6. Prüfvorrichtung (10) nach einem der Ansprüche 1 bis 5, **dadurch gekennzeichnet, dass** die elektrische Welle (40) einen Phasenschieber (56) umfasst und/oder dass die elektrische Welle (40) keinen Wandler umfasst oder dass die elektrische Welle (40) einen Frequenzumrichter (80) umfasst oder zwei in Serie geschaltete Frequenzumrichter (80) oder Wechselrichter (75', 75") umfasst.

7. Prüfvorrichtung (10) nach einem der Ansprüche 1 bis 6, **dadurch gekennzeichnet, dass** die Einspeisevorrichtung (72, 74, 76) einen Frequenzumrichter (74) umfasst.

8. Verfahren (100) zum Prüfen einer ersten (21) und/oder einer zweiten (22) elektrischen Maschine, wobei das Verfahren (100) folgende Schritte umfasst:
- Zuführen (110) einer elektrischen Leistung (Pₑₗₑₖ) von einer externen Energiequelle (72, 74, 76, 78) zu der ersten elektrischen Maschine (21) zum Umwandeln der zugeführten elektrischen Leistung (P_{mech}, Pₑₗₑₖ) in mechanische Leistung (P₁) und/oder Zuführen einer mechanischen Leistung (P_{mech}) zu der ersten elektrischen Maschine (21);
- Übertragen (120) einer mechanischen Leistung (P₂) von der ersten elektrischen Maschine (21) zu der zweiten elektrischen Maschine (22);
- Umwandeln (130) zumindest eines Teils der mechanischen Leistung (P₂), die der zweiten elektrischen Maschine (22) zugeführt wurde, mittels der zweiten elektrischen Maschine (22) in elektrische Leistung (P₃);
- Übertragen (140) zumindest eines Teils der elektrischen Leistung (P₃), die von der zweiten elektrischen Maschine (22) mittels der Umwandlung mechanischer Leistung (P₂) erzeugt wurde, zu der ersten elektrischen Maschine (21) über eine elektrische Welle (40); und
- Umwandeln (150) zumindest eines Teils der elektrischen Leistung (P₄), die von der zweiten elektrischen Maschine (22) der ersten elektrischen Maschine (21) zugeführt wurde, mittels der ersten elektrischen Maschine (21) in mechanische Leistung;
wobei die elektrische Welle (40) dafür vorbereitet ist, zwischen der ersten elektrischen Maschine (21) und der zweiten elektrischen Maschine (22) mindestens um einen Faktor v soviel elektrische Leistung zu übertragen, wie Einspeisevorrichtungen (72, 74, 76) der Prüfvorrichtung (10) zum Einspeisen von elektrischer Energie aus einer externen elektrischen Energiequelle (72, 74, 76, 78) in die elektrische Welle (40) maximal vorbereitet sind, wobei der Faktor v mindestens 5 beträgt und unterstellt wird, dass der Faktor v den genannten Mindestwert aufweist, falls die Prüfvorrichtung (10) eine solche Einspeisevorrichtung (72, 74, 76) nicht umfasst;
**dadurch gekennzeichnet, dass**
die Prüfvorrichtung (10) eine mechanische Antriebsvorrichtung (48) zur Einkopplung von mechanischer Leistung (P_{mech}) in die erste (21) und/oder in die zweite (22) elektrische Maschine und/oder in den Drehmomentübertrager (36) umfasst.

## Claims

1. Test apparatus (10) for testing a first (21) and/or a second (22) electrical machine, wherein the test apparatus (10) comprises:
- a torque transmitter (36) for transmitting a torque between a first electrical machine (22) and a second electrical machine (21), wherein the torque transmitter (36) has a torque connection for the first electrical machine (21) and a torque connection for the second electrical machine (22) ;
- an electrical shaft (40) which has a first electrical connection (41) for the first electrical machine (21) and a second electrical connection (42) for the second electrical machine (22);
wherein the electrical shaft (40) is designed to transmit, between the first electrical connection (41) and the second electrical connection (42), as much electrical power, at least by a factor v, as the maximum electrical energy from an external electrical energy source (72, 74, 76, 78) that injection devices (72, 74, 76) of the test apparatus (10) are designed to inject into the electrical shaft (40), wherein the factor v is at least 5 and it is assumed that the factor v has the specified minimum value if the test apparatus (10) does not comprise such an injection device (72, 74, 76)
**characterised in that**
the test apparatus (10) comprises a mechanical drive device (48) for coupling mechanical power (P_{mech}) into the first (21) and/or into the second (22) electrical machine and/or into the torque transmitter (36).

2. Test apparatus (10) according to claim 1, **characterised in that** the factor v is at least 6, preferably least 7 or 8, with particular preference at least 9.

3. Test apparatus (10) according to claim 1 or 2, **characterised in that** the test apparatus (10) has a device (51) for twisting a stator of the first electrical machine (21) relative to a stator of the second electrical machine (22) and/or that the test apparatus (10) has a device (10) for twisting a stator of the second electrical machine (22) relative to a stator of the first electrical machine (21).

4. Test apparatus (10) according to one of claims 1 to 3, **characterised in that** the test apparatus (10) also comprises the first (21) and/or the second (22) electrical machine.

5. Test apparatus (10) according to claim 4, **characterised in that** the first electrical machine (21) and/or the second electrical machine (22) is a synchronous machine.

6. Test apparatus (10) according to one of claims 1 to 5, **characterised in that** the electrical shaft (21) comprises a phase shifter (56) and/or that the electrical shaft (40) comprises no transducer or that the electrical shaft (40) comprises a frequency converter (80) or comprises two series-connected frequency converters (80) or rectifiers (75', 75").

7. Test apparatus (10) according to one of claims 1 to 6, **characterised in that** the injection device (72, 74, 76) comprises a frequency converter (74).

8. Method (100) for testing a first (21) and/or a second (22) electrical machine, wherein the method (100) comprises the following steps:
- supplying (110) an electrical power (P_{elec}) from an external power source (72, 74, 76, 78) to a first electrical machine (21) for conversion of the supplied electrical power (P_{mech}, P_{elec}) into mechanical power (P₁) and/or supplying a mechanical power (P_{mech}) to the first electrical machine (21);
- transmitting (120) a mechanical power (P₂) from the first electrical machine (21) to the second electrical machine (22);
- converting (130) at least some of the mechanical power (P₂) that was supplied to the second electrical machine (22) into electrical power (P₃) by means of the second electrical machine (22);
- transmitting (140) to the first electrical machine (21), via an electrical shaft (40), at least some of the electrical power (P₃) that was generated by the second electrical machine (22) by means of the conversion of mechanical power (P₂); and
- converting (150) at least some of the electrical power (P₄) that was supplied by the second electrical machine (22) to the first electrical machine (21) into mechanical power by means of the first electrical machine (21);
wherein the electrical shaft (40) is designed to transmit, between the first electrical machine (21) and the second electrical machine (22), as much electrical power, at least by a factor v, as the maximum electrical energy from an external electrical energy source (72, 74, 76, 78) that injection devices (72, 74, 76) of the test apparatus (10) are designed to inject into the electrical shaft (40), wherein the factor v is at least 5 and it is assumed that the factor v has the specified minimum value if the test apparatus (10) does not comprise such an injection device (72, 74, 76).
**characterised in that**
the test apparatus (10) comprises a mechanical drive device (48) for coupling mechanical power (P_{mech}) into the first (21) and/or into the second (22) electrical machine and/or into the torque transmitter (36).

## Revendications

1. Dispositif (10) de contrôle d'une première (21) et/ou d'une deuxième (22) machines électriques, le dispositif (10) de contrôle comprenant :
- un transmetteur (36) de couple pour transmettre un couple entre une première machine (22) électrique et une deuxième machine (21) électrique, le transmetteur (36) de couple ayant une borne de couple pour la première machine (21) électrique et une borne de couple pour la deuxième machine (22) électrique,
- un arbre (40) électrique qui a une première borne (41) électrique pour la première machine (21) électrique et une deuxième borne (42) électrique pour la deuxième machine (22) électrique,
- l'arbre (40) électrique étant propre à transmettre entre la première borne (41) électrique et la deuxième borne (42) électrique au moins d'un facteur v autant de puissance électrique
que des dispositifs (72, 74, 76) d'injection du dispositif (10) de contrôle sont propres à injecter au maximum de l'énergie électrique d'une source (72, 74, 76, 78) extérieure d'énergie électrique dans l'arbre (40) électrique, le facteur v étant d'au moins 5 et étant supposé que le facteur v est ladite valeur minimum si le dispositif (10) de contrôle ne comprend pas un tel dispositif (72, 74, 76) d'injection,
**caractérisé en ce que**
le dispositif (10) de contrôle comprend un dispositif (48) d'entraînement mécanique pour injecter de la puissance (P_{mech}) mécanique dans la première (21) et/ou dans la deuxième (22) machines électriques et/ou dans le transmetteur (36) de couple.

2. Dispositif (10) de contrôle suivant la revendication 1, **caractérisé en ce que** le facteur v est d'au moins 6, de préférence d'au moins 7 ou 8, notamment de préférence d'au moins 9.

3. Dispositif (10) de contrôle suivant la revendication 1 ou 2, **caractérisé en ce que** le dispositif (10) de contrôle comprend un dispositif (51) de torsion d'un stator de la première machine (21) électrique par rapport à un stator de la deuxième machine (22) électrique et/ou **en ce que** le dispositif (10) de contrôle comprend un dispositif (10) de torsion d'un stator de la deuxième machine (22) électrique par rapport à un stator de la première machine (21) électrique.

4. Dispositif (10) de contrôle suivant l'une des revendications 1 à 3, **caractérisé en ce que** le dispositif (10) de contrôle comprend aussi la première (21) et/ou la deuxième (22) machines électriques.

5. Dispositif (10) de contrôle suivant la revendication 4, **caractérisé en ce que** la première machine (21) électrique et/ou la deuxième machine (22) électrique est une machine synchrone.

6. Dispositif (10) de contrôle suivant l'une des revendications 1 à 5, **caractérisé en ce que** l'arbre (40) électrique comprend un déphaseur (56) et /ou l'arbre (40) électrique ne comprend pas de transducteur ou **en ce que** l'arbre (40) électrique comprend un convertisseur (80) de fréquence ou deux convertisseurs (80) de fréquence montés en série ou un onduleur (75', 75").

7. Dispositif (10) de contrôle suivant l'une des revendications 1 à 6, **caractérisé en ce que** le dispositif (72, 74, 76) d'injection comprend un convertisseur (74) de fréquence.

8. Procédé (100) de contrôle d'une première (21) et/ou d'une deuxième (22) machines électriques, le procédé (100) comprenant les stades suivants :
- envoi (110) d'une puissance (Pₑₗₑₖ) électrique d'une source (72, 74, 76, 78) extérieure d'énergie à la première machine (21) électrique pour transformer la puissance (P_{mech}, Pₑₗₑₖ) électrique envoyée en puissance (P₁) mécanique et/ou envoi d'une puissance (P_{mech}) mécanique à la première machine (21) électrique,
- transmission (120) d'une puissance (P₂) mécanique de la première machine (21) électrique à la deuxième machine (22) électrique,
- transformation (130) d'au moins une partie de la puissance (P₂) mécanique qui a été envoyée à la deuxième machine (22) électrique en de la puissance (P₃) électrique au moyen de la deuxième machine (22) électrique,
- transmission (140) d'au moins une partie de la puissance (P₃) électrique, qui a été produite par la deuxième machine (22) électrique au moyen de la transformation de la puissance (P₂) mécanique, à la première machine (21) électrique par l'intermédiaire d'un arbre (40) électrique et ;
- transformation (150) d'au moins une partie de la puissance (P₄) électrique, qui a été envoyée par la deuxième machine (22) électrique à la première machine (21) électrique, en puissance mécanique au moyen de la première machine (21) électrique,
dans lequel l'arbre (40) électrique est propre à transmettre entre la première machine (21) électrique et la deuxième machine (22) électrique au moins d'un facteur v autant de puissance électrique
que des dispositifs (72, 74, 76) d'injection du dispositif (10) de contrôle sont propres à injecter au maximum de l'énergie électrique d'une source (72, 74, 76, 78) extérieure d'énergie électrique dans l'arbre (40) électrique, le facteur v étant d'au moins 5 et étant supposé que le facteur v est ladite valeur minimum si le dispositif (10) de contrôle ne comprend pas un tel dispositif (72, 74, 76) d'injection,
**caractérisé en ce que**
le dispositif (10) de contrôle comprend un dispositif (48) d'entraînement mécanique pour injecter de la puissance (P_{mech}) mécanique dans la première (21) et/ou dans la deuxième (22) machines électriques et/ou dans le transmetteur (36) de couple.
